(19) **Europäisches Patentamt / European Patent Office / Office européen des brevets**

(11) **EP 2 256 085 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(51) Int Cl.:
*C01B 17/765* (2006.01)    *C01B 17/80* (2006.01)
*B01J 8/06* (2006.01)

(21) Anmeldenummer: **10172657.8**

(22) Anmeldetag: **13.10.2007**

(54) **Verfahren und Vorrichtung zur katalytischen Oxidation von SO2-haltigen Gasen mit Sauerstoff**

Process and apparatus for the catalytic oxidation of SO2-containing gases by means of oxygen

Procédé et dispositif pour l'oxydation catalytique des gaz contenant du SO2 avec de l'oxygène

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.10.2006 DE 102006051899**

(43) Veröffentlichungstag der Anmeldung:
**01.12.2010 Patentblatt 2010/48**

(62) Dokumentnummer(n) der früheren Anmeldung(en) nach Art. 76 EPÜ:
**07818981.8 / 1 979 270**

(73) Patentinhaber: **Bayer Technology Services GmbH 51368 Leverkusen (DE)**

(72) Erfinder:
• **Erkes, Bernd**
**41379 Brüggen (DE)**
• **Kürten, Martin**
**51465 Bergisch Gladbach (DE)**
• **Haverkamp, Verena**
**51467 Bergisch Gladbach (DE)**

(56) Entgegenhaltungen:
**EP-A- 0 572 053**    **EP-A- 0 715 886**
**DE-A1- 19 531 630**    **GB-A- 1 504 725**

**Beschreibung**

Die Erfindung betrifft ein Verfahren und eine Vorrichtung zur katalytischen Oxidation von 0,1 - 66 Vol% $SO_2$-haltigen Gasen mit Sauerstoff in einem quasi-isotherm betriebenen Röhrenkontaktapparat (QIK) unter indirekter Kühlung bzw. Aufheizung zur Einhaltung der angestrebten Arbeitstemperatur des Katalysators.

Im Stand der Technik wird üblicherweise Schwefelsäure in der großtechnischen Anlage nach dem so genannten Doppelkontaktverfahren in einem Reaktor aus einem oder mehreren Katalysator enthaltenden Kontaktstufen hergestellt (beschrieben z.B. in Ullmanns Encyclopedia of Industrial Chemistry). Die Oxidation $SO_2 + \frac{1}{2} O_2 \rightarrow SO_3$ erfolgt üblicherweise katalytisch z.B. an einem Vanadiumpentoxid Katalysator mit oder ohne Cäsium in einem Temperaturfenster von T = 380 °C - 650 °C. Es ist weiterhin bekannt, dass bei T < 340 °C - 380 °C der Katalysator nicht die erforderliche Zündtemperatur erreicht und dass er bei T > 630 °C - 650 °C irreversibel geschädigt wird. Über einen $SO_2$-Gehalt von 13,5 Vol. % hinaus in einer klassischen Kontaktstufe ist außerdem bekannt, dass die Reaktion so exothermisch ist, dass der Katalysator so genannte Hot-Spots bildet und irreversibel geschädigt wird. Um nun den Erfordernissen des Katalysators zu entsprechen, werden daher die dem Stand der Technik entsprechenden Anlagen zur Vermeidung der irreversiblen Schädigung des Katalysators bei T < 640 °C mit $SO_2$-Gehalten < 13,5 Vol. % im Ausgangsgas betrieben. Außerdem um sicher zu gehen, dass der Katalysator in einem adiabat gemäß dem Stand der Technik geführte Prozess anspringt, muss die Ausgangsgaseintrittstemperatur T > 380 °C und die $SO_2$-Gehalte bei > ca. 5 Vol. % liegen.

Zur katalytischen Oxidation von Ausgangsgasen mit $SO_2$ > 13,5 Vol. % wurde z. B. vorgeschlagen, das Ausgangsgas vor der Aufgabe auf den Katalysator zunächst mit Luft zu verdünnen und entsprechend größere Gasvolumina durch die Anlage zu führen. Insbesondere in der Anwendung pyrometallurgischer Abgase als schwefeldioxidreichen Ausgangsgasen mit $SO_2$-Gehalten von 20 - 66 Vol. % wäre ein großer Verdünnungsfaktor erforderlich mit der Folge unverhältnismäßig hoher Kosten.

DE-OS 2026818 beschreibt ein Verfahren, bei dem die Ausgangsgase vor Eintritt in die erste Kontaktstufe mit aus Oleum ausgetriebenem $SO_3$ und zusätzlicher Verdünnungsluft auf eine $SO_2$-Konzentration von 10-20 Gew. % verdünnt werden. Nachteilig hierbei sind der kostenmäßig hohe Aufwand und der spezifisch geringe $SO_2$-Umsatz in der ersten Kontaktstufe.

DE-10249782 beschreibt ein Verfahren zur Herstellung von Schwefelsäure auf Basis konzentrierter Ausgangsgase $SO_2$ > 13,5 Vol. % in einem Reaktor mit mehreren Kontaktstufen, das mit relativ geringeren Mengen an Verdünnungsluft gefahren werden kann. Die Verdünnung in der ersten Kontaktstufe wird durch Rückführung eines teiloxidierten Gasstroms erreicht. Aus einer der letzten Hauptkontaktstufe vorgeschalteten Kontaktstufen wird ein Teilstrom des $SO_2$ / $SO_3$-haltigen Gases abgezogen. Dieser Teilstrom wird mit dem Ausgangsgas ($SO_2$-Gehalt von mehr als 13 Vol. %) zu einem Kontaktgas vermischt, so dass der $SO_2$-Gehalt zur sicheren Vermeidung einer Überhitzung des Katalysators unterhalb von 13 Vol. % liegt und in die erste Kontaktstufe geführt werden kann. Hierbei erfolgt eine Verlagerung des thermodynamischen Gleichgewichts der Reaktion $SO_2 + 1/2 O_2 \iff SO_3$ in Richtung der Edukte, wodurch eine Überhitzung des Katalysators vermieden wird. Nachteilig an diesem Verfahren ist der hohe apparative Aufwand.

GB1504725A offenbart eine Vorrichtung und ein Verfahren zur Herstellung von Schwefeltrioxid aus technisch reinem Schwefeldioxid und technischem Sauerstoff in einem röhrenförmigen Wärmetauscher. Aus der Beschreibung (Seite 2 Zeile 17) geht hervor, dass der Wärmetauscher einen äußeren Mantel aufweist, in dem das Wärmeübertragungsmedium geführt wird, und ein inneres, katalysatorgefülltes Rohr umfasst, dem Wärme mittels des Wärmeübertragungsmedium zugeführt oder von dem Wärme abgeführt werden kann. GB1504725A offenbart, dass der Wärmetauscher mehr als ein Reaktionsrohr umfassen kann; es ist jedoch nicht offenbart, wie ein Wärmetauscher mit mehreren Reaktionsrohren beschaffen ist.

Insbesondere in metallurgischen Prozessen und den hier resultierenden Abgasen aber auch für Kapazitätserweiterungen bestehender Schwefelsäureanlagen mit Schwefelverbrennung ergibt sich die Notwendigkeit wirtschaftlicher Verfahren zur Behandlung von Ausgangsgasen mit $SO_2$-Konzentrationen > 13,5 Vol. % unter Beibehaltung der Volumenströme und damit der Hydraulik.

In einer Vielzahl von chemischen Prozessen, in denen Schwefelverbindungen eingesetzt werden, wird außerdem ein wirtschaftliches und ökologisches Verfahren zur Behandlung von Ausgangsgasen mit $SO_2$ < 5 Vol. %, auch mit stark schwankenden Konzentrationen benötigt.

Es bestand daher die Aufgabe, einerseits die kostengünstige Herstellung von Schwefelsäure für konzentrierte Ausgangsgase mit Schwefeldioxidgehalten > 13,5 Vol. % zu ermöglichen und andererseits ein wirtschaftlich ökologisches Verfahren für schwefeldioxidhaltige Abgase ($SO_2$ < 5 Vol. %) aus diversen chemischen Prozessen zur Verfügung zu stellen.

Bei der vorliegenden Erfindung wurde die Aufgabe durch eine quasi-isotherme Prozessführung unter Energie Zu- oder -Abfuhr, vorzugsweise über einen Zwischenkreislauf und vorzugsweise in einem Röhrenkontaktapparat, gelöst. Für Ausgangsgase mit $SO_2$ > ca. 5 Vol. % wird die entstehende Reaktionswärme über einen Zwischenkreislauf kontinuierlich so abgeführt, dass sich eine quasi-isotherme Prozessführung am Katalysator, beim Einsatz eines Vanadiumpentoxidkatalysators mit oder ohne Cäsium bevorzugt in einem Temperaturfenster von T = 420 °C - 600 °C, einstellt und für Ausgangsgase mit $SO_2$ < ca. 5 Vol. % kann über den Zwischenkreislauf kontinuierlich so Wärme zugeführt werden, dass sich eine quasi-isotherme Prozessführung am Katalysator, beim Einsatz eines Vanadiumpentoxidkatalysators bevorzugt im Temperaturfenster von T = 420 °C bis 600 °C ebenfalls einstellt.

Das erfindungsgemäße Verfahren ermöglicht überraschenderweise Ausgangsgase mit einem Gehalt 0,1 < $SO_2$ < 66 Vol. % wenigstens teilweise durch Oxidation mit Sauerstoff am Katalysator zu Schwefeltrioxid umzusetzen.

Gegenstand der vorliegenden Erfindung ist daher ein Verfahren zur kontinuierlichen katalytischen, kompletten oder teilweisen Oxidation eines Ausgangsgases, enthaltend Schwefeldioxid und Sauerstoff, dadurch gekennzeichnet, dass der Katalysator mit einer quasi-isothermen Prozessführung unter Energie Zu- oder -Abfuhr aktiv gehalten wird, gemäß Anspruch 1.

Ein weiterer Gegenstand der vorliegenden Erfindung ist eine Vorrichtung zur kontinuierlichen katalytischen, kompletten oder teilweisen Oxidation eines Ausgangsgases, enthaltend Schwefeldioxid und Sauerstoff, gekennzeichnet durch mindestens einen Röhrenkontaktapparat, der ein stehender Wärmetauscher aus mindestens einem Doppelmantelrohr ist, dessen mit Katalysator eingefülltes Innenrohr ein Reaktionsrohr bildet, wobei die Wärme um das Reaktionsrohr mittels eines Kühlmediums übertragen wird und dem Röhrenkontaktapparat ein Absorber zur Abtrennung von $SO_3$ nachgeschaltet ist.

Der Röhrenkontaktapparat ist ein stehender Wärmetauscher aus mehreren Doppelmantelrohren, die ein Innenrohr und ein Außenrohr aufweisen, wobei ein Katalysator in den Innenrohren eingefüllt ist und die Wärmeübertragung um diese Innenrohre/Reaktionsrohre durch ein im Gleichstrom geführtes Kühlmedium im Zwischenraum aus Innen- und Außenrohr erfolgt.

Bei dem erfindungsgemäßen Verfahren wird das sich einstellende Temperaturfenster und insbesondere Temperaturmaximum innerhalb festgelegter Grenzen bezüglich der Schwefeldioxidkonzentration im Wesentlichen in der Designphase festgelegt. Wesentliche Parameter sind Gaseintrittstemperatur, Gasgeschwindigkeit, Katalysatorverdünnung, Rohrgeometrie und Kühlleistung.

Die Bedingungen im Zwischenkreislauf werden üblicherweise so eingestellt, dass der Katalysator beim Einsatz eines Vanadiumpentoxidkatalysators mit oder ohne Cäsium an keiner Stelle den schädlichen Grenzwert von 640 °C überschreitet. Bevorzugt werden die Bedingungen so eingestellt, dass sich das einstellende Temperaturprofil über die Rohrlänge so einstellt, dass die Eintrittstemperatur von 380 °C bis 450 °C, vorzugsweise 400°C bis 450°C, die Austrittstemperatur in einem Bereich von 430 °C - 500 °C und ein Temperaturmaximum bei nicht höher als 580 °C liegen. In einer bevorzugten Ausführungsform des erfindungsgemäßen Verfahrens wird ein mit Cäsium dotierter Vanadiumpentoxidkatalysator mit 5-10%, bevorzugt 6-8% besonders bevorzugt mit 7,5% Anteil Cäsium für niedrige Gaseintrittstemperaturen von 360-450°C, bevorzugt 370-450°C, besonders bevorzugt 380-450°C eingesetzt.

Vorzugsweise weist der Röhrenkontaktapparat Reaktionsrohre mit Nenndurchmessern von 25 mm bis 150 mm, bevorzugt 50 mm bis 80 mm bei Rohrlängen von 1 m bis 12 m, bevorzugt 2 m bis 6 m auf.

Üblicherweise besteht der Katalysator aus einem katalytisch aktiven Metall oder Metallderivaten aufgetragen ggf. mit Promotoren auf einem Katalysatorträgermaterial. Beispielsweise ist der Katalysator $V_2O_5$ mit Kalium und Natriumsalze auf $SiO_2$ geträgert.

Zur Verbesserung des Temperaturprofils über die Schütthöhe des Katalysators wird in einer besonderen Ausführungsform des Verfahrens der Katalysator mit einem temperaturbeständigen Inertmaterial, insbesondere dem reinen Katalysatorträgermaterial wie z. B. Glas, $SiO_2$, $Al_2O_3$ oder sonstige übliche Oxide, Keramik, Silicagel oder Zeolithe, bevorzugt Glas und Keramik, vermischt.

Üblicherweise wird der eingesetzte Katalysator in seiner Reaktivität durch Mischen mit dem Inertmaterial im Mengenverhältnis 1:100 bis 100:1 voreingestellt. Bevorzugt werden Inertmaterial und Katalysator in Mengenverhältnissen 90:10 bis 40:60, besonders bevorzugt 80:20 bis 40:60 vermischt.

Um die Reaktionsrohre erfolgt je nach $SO_2$-Konzentration der Eintrittsgase eine kontinuierliche Wärmeabfuhr oder Wärmezufuhr.

Da sich über die Rohrlänge abhängig von der Gasmenge, Gaseintrittstemperatur, $SO_2$-Eintrittskonzentration, dem ausgeführten Apparatedesign, wie Rohrlänge, Rohrdurchmesser, Verdünnungsgrad des Katalysators, Rohranströmung aufgrund der Kinetik ein Temperaturmaximum einstellt, kommt der Wärmeabfuhr eine besondere Bedeutung zu.

Aufgrund des exothermen Reaktionsverlaufs bietet die Gleichstromführung des kühlmediums deutliche Vorteile in Bezug auf die sichere Vermeidung von lokalen Temperaturüberschreitungen am Katalysator und bezüglich des Massenstroms des im Kreislauf zu führenden Kühlmediums

Als Kühlmedium für die indirekte Wärmezu- und/oder -abfuhr über den Zwischenkreislauf können grundsätzlich in Betracht gezogen werden: Wärmeträgeröle, Salzlösungen, Dampf, Gase und Luft. Aus Kostengründen wird Luft als Medium bevorzugt. Bei Einsatz von Luft als bevorzugtes Kühlmedium ist die Doppelmantelkonstruktion so gewählt, dass sich aufgrund der Betriebsparameter und gewählten Rohrpaarungen (Innenrohr und Außenrohr) eine Wärmeübertragungszahl (Alphawerte) von 20 bis 80 $W/m^2K$ bevorzugt 40 bis 70 $W/m^2K$ einstellt. In einer besonderen Ausführungsform der erfindungsgemäßen Vorrichtung wird die Temperatur im Röhrenkontaktapparat mit einem indirekt betriebenen Kühl- und/oder Aufheizerkreislauf bestehend aus einem Kühler, Gebläse oder Pumpe und/oder Anheizer eingestellt.

Die aus dem Kühlkreislaufbetrieb im Temperaturniveau von etwa 220 °C bis 550 °C, bevorzugt von 300 °C bis 450 °C abzuführende Wärme kann über einen Wärmetauscher bevorzugt als Niederdruckdampf zur weiteren betrieblichen Verwendung ausgekoppelt werden.

In einer Ausführungsform der erfindungsgemäßen Vorrichtung werden mehrere Röhrenkontaktapparate in Reihe oder parallel geschaltet.

In weiteren Ausführungsformen weist die Vorrichtung dem Röhrenkontaktapparat nachgeschaltet:

- optional einen oder zwei Vorabsorber (Oleum/Zwischenabsorber),
- eine oder mehrere Kontaktstufen, optional mit einem Oleum/Zwischenabsorber,
- ein Endabsorber und
- optional eine Abgasreinigungsanlage

auf.

Der Röhrenkontaktapparat kann mit einer klassischen Kontaktanlage, vorzugsweise mit einer Doppelkontaktanlage und wenigstens einem Oleum/Zwischenabsorber, einer Kontaktstufe und einem Endabsorber, kombiniert werden. In diesem Fall wird der Röhrenkontaktapparat der klassischen Doppelkontaktanlage vorgeschaltet. Für sehr hohe Eingangskonzentration an Schwefeldioxid ist dem Röhrenkontaktapparat vorzugsweise ein Vorabsorber nachgeschaltet. Die Vor-, Oleum/Zwischen- und Endabsorber entnehmen dem Gasstrom das produzierte $SO_3$. Die Gase, deren Schwefeldioxideintrittskonzentrationen mit Hilfe des erfindungsgemäßen Verfahrens auf 5 bis 13 Vol. % reduziert wurden, können in der nachgeschalteten Doppelkontaktanlage gemäß dem Stand der Technik weiterbehandelt werden.

Werden Röhrenkontaktapparat und eine klassische Kontaktanlage aus einer oder mehreren Kontaktstuffen gekoppelt, wird sinnvollerweise in dem Röhrenkontaktapparat bzgl. der chemischen Zusammensetzung der gleiche Katalysator eingesetzt wie in den Kontaktstufen der Kontaktanlage.

Das Verfahren kann, abhängig von der zugrunde zu legenden $SO_2$-Eingangskonzentration im Ausgangsgas und von der Art der benötigten Anlage also Neuanlage oder Nachrüsten einer bestehenden Anlage, in unterschiedlichen Konzepten realisiert werden.

Bei Ausgangsgasen mit bis zu 5 Vol. % Schwefeldioxid kann, falls erforderlich, der Vanadiumpentoxidkatalysator mit oder ohne Cäsium durch kontinuierliche Wärmezufuhr über den indirekten Aufheizkreislauf auf eine für die Reaktion günstige Temperatur von 450 °C bis 580 °C gehalten werden. Das entstandene $SO_3$ wird in einem Endabsorber gemäß dem Stand der Technik vom Schwefeltrioxid befreit. Der nicht umgesetzte Anteil an Schwefeldioxid kann in einer Endgaswäsche z.B. katalytisch an nasser Aktivkohle oder anderen gängigen Verfahren auf die geforderten gesetzlichen Emissionsgrenzwerte endgereinigt werden.

Bei Ausgangsgasen mit weniger als 5 Vol. % Schwefeldioxid ermöglicht das erfindungsgemäße Verfahren in einem quasi-isotherm betriebenen Röhrenkontaktapparat Schwefeldioxid durch Oxidation zu Schwefeltrioxid, unter Verwendung z. B. von konventionellen Vanadiumpentoxidkatalysatoren mit oder ohne Cäsium mit einem hohen Umsatz (> 90 %) in einem Apparat zu verarbeiten, bei gleichzeitig hoher Flexibilität in Bezug auf die Eingangskonzentrationen an Schwefeldioxid. Ein weiterer großer Vorteil des erfindungsgemäßen Verfahrens ist seine Umweltfreundlichkeit. Bei Verwendung eines geeigneten Endgasreinigungsverfahrens kann das $SO_2$ nahezu zu 100 % zu Schwefelsäure umgesetzt werden.

Bei Ausgangsgasen mit einer Schwefeldioxidkonzentration größer als 5 Vol. % kann der Katalysator durch kontinuierliche Wärmeabfuhr über den indirekten Kühlkreislauf auf eine für die Reaktion günstige Temperatur von 420 °C bis 600 °C gehalten werden. Es werden gegenüber herkömmlichen Verfahren auch über die 13,5 Vol. % $SO_2$-Grenze hinaus keine Verdünnungsgase mehr eingesetzt. Eine Überhitzung des Katalysators wird über alle Betriebszustände durch die Dimensionierung des Röhrenkontaktapparates einer ausreichenden Kühlleistung und Verdünnung des Katalysators mit Inertmaterial sicher erreicht. Ein weiterer Vorteil ist also gegenüber herkömmlichen Verfahren, dass bei unveränderten Volumenströmen durch die gesamte Kontaktanlage entsprechend größere Mengen an Schwefelsäure generiert werden können, bzw. sich die Kapazität der vorgeschalteten Produktionsanlage erhöhen lässt.

Bei Ausgangsgase mit größer als 5 Vol. % Schwefeldioxid über den quasi-isotherm betriebenen Röhrenkontaktapparat ermöglicht das erfindungsgemäße Verfahren, Schwefeldioxid durch Oxidation zu Schwefeltrioxid unter Verwendung von z. B. konventionellen Vanadiumpentoxid Katalysatoren mit oder ohne Cäsium mit hohem Umsatz (> 90 %) in einem Apparat zu verarbeiten, mit dem Vorteil hoher Flexibilität in Bezug auf die Eingangskonzentrationen an Schwefeldioxid.

Ein weiterer Vorteil des erfindungsgemäßen Verfahrens besteht dann, wenn eine bestehende Anlage nach dem Doppelkontaktverfahren in Bezug auf den Schwefeldioxidumsatz durch Anhebung der $SO_2$-Eintrittskonzentration auf deutlich über 13,5 Vol. % erweitert werden soll.

In einer besonderen Ausführungsform des Verfahrens kann ein Teilstrom durch Vorschaltung eines Quasi-Isotherm betriebenen Röhrenkontaktapparates derart behandelt werden, dass nach Wiedervereinigung beider Teilströme eine $SO_2$-Konzentration von unter 13 Vol. % $SO_2$ entsteht. Das mit dem erfindungsgemäßen Verfahren vorbehandelte Gas kann dann erfolgreich in der klassischen Doppelkontaktanlage weiterbehandelt werden.

In einer weiteren Ausführungsform des Verfahrens kann einer konventionellen Doppelkontaktanlage ein Röhrenkontaktapparat in Reihe vorgeschaltet werden.

Üblicherweise können Kontaktgase mit einem Schwefeldioxidgehalt von 13,5 bis 30 Vol. %, vorzugsweise zwischen 15 und 25 Vol. % im Röhrenkontaktapparat zugeführt werden. Sollen höhere $SO_2$-Eingangskonzentrationen z. B. von 30 bis 66 Vol. % im Röhrenkontaktapparat verarbeitet werden, so wird abhängig von der Gaszusammensetzung am Eingang vorzugsweise dem Eingangsstrom Luft- und/oder technischen Sauerstoff beigegeben. Dabei beträgt üblicherweise das Verhältnis von $O_2$ zu $SO_2$ im Kontaktgas 0,5 bis 1,2 und noch bevorzugter von 0,7 bis 0,9.

Wird der Röhrenkontaktapparat einer klassischen Doppelkontaktanlage vorgeschaltet, wird der Prozess durch Sollwertregelung des Kühlkreislaufs so geführt, dass die den Apparat verlassenden Gase bezüglich der $SO_2$-Konzentration so eingestellt sind, dass die Bedingungen der nachgeschalteten Hauptkontaktstufen, ($SO_2$-Konzentration <13 Vol. %) erfüllt sind. Die Gase werden dabei vorzugsweise in einem Vorabsorber gemäß dem Stand der Technik wenigstens teilweise vom Schwefeltrioxid befreit, ehe sie in die erste Hauptkontaktstufe zur weiteren Oxidation des Schwefeldioxids geleitet werden. Bei dieser Verfahrensführung werden die Hauptkontakte üblicherweise wie bei den herkömmlichen Verfahren betrieben. So kann eine herkömmliche Anlage zu einer flexiblen Produktionsanlage mit höheren Kapazität und geringem Investitionsaufwand verbessert werden.

Das erfindungsgemäße Verfahren ermöglicht die direkte Produktion von Oleum 35 % und Oleum 65% unter Wegfall einer Destillationsstufe und durch Teilkondensation die Herstellung von Oleum 100%.

## Simulationen:

Mit einem mathematischen Simulationsmodell, dass erfindungsgemäß ein Einzelrohr des Röhrenkontaktapparates mit einer quasi-isothermen Prozessführung abbildet, wird gezeigt, dass sich für den beanspruchten Bereich von Schwefeldioxidgehalten zwischen 0,1-66 -Vol. % mit dem erfindungsgemäßen Röhrenkontaktapparat innerhalb der beanspruchten Prozessfenster überraschenderweise die gewünschten Umsätze oberhalb von 85 %, vorzugsweise oberhalb von 92% erzielen lassen.

Die Reaktion von Schwefeldioxid zum Schwefeltrioxid an einem $V_2O_5$-Katalysator wird dabei durch den folgenden vereinfachten kinetischen Ansatz beschrieben:

$$R = \frac{k_{10} \cdot e^{\left(\frac{-E_A}{R \cdot T} + B_0\right)} \cdot p \cdot y_{SO_2}}{\left(y_{SO_2} + k_2 \cdot y_{SO_3}\right)} \cdot \left(1 - \frac{Q_R}{K_P}\right).$$

Hierbei ist $Q_R$ der Reaktionsquotient und $K_p$ die Gleichgewichtskonstante der Reaktion. Dieser Ansatz ist z. B. beschrieben in folgenden Literaturquellen ("Rate Equations of Solie-Catalyzed Reactions", Edt. Reiji Mezaki, Hakuai Inoue, University Tokyo Press, 1990, S. 1-11). Hierbei wurden folgende Werte für die einzelnen Konstanten genommen $E_A$ = 92084 J/mol, $B_0$ = 15,1 J/mol und $k_2$ = 0,8.

Als Katalysator wird der $V_2O_5$-Katalysator auf einem Träger $SiO_2$ der Firma BASF des Typs 04-110 verwendet. Für diesen Katalysator wurden der Wert $k_{10}$ =1,3E-5 mol/(g-Katalysator s bar gefunden.

Das Einzelrohr hatte einen Innendurchmesser von 60,9 mm und eine Länge von 4 m. Es ist mit dem $V_2O_5$-Katalysator gemischt mit dem inerten Katalysatorträgermaterial als Inertmaterial gefüllt.

## Simulation 1:

In einer ersten Simulation wurde das Einzelrohr mit einer Mischung aus Inertmaterial zu Katalysator im Verhältnis 72,5 : 27,5 ($m^3$:$m^3$) gefüllt. Das Außenrohr wurde mit Luft gekühlt, mit einer Eintrittstemperatur von 410 °C und einer Austrittstemperatur von 435 °C. Das Eingangsgas aus Schwefeldioxid zusammen mit Sauerstoff, Stickstoff und Kohlendioxid strömte bei einem Druck von 1,4 bar in das Einzelrohr, die spezifischen Massenströme betrugen dabei 2,09 g-$N_2$/s/kg-Katalysator, 1,06 g-$CO_2$/s/kg-Katalysator, 0,31 g-$SO_2$/s/kg-Katalysator (4 Vol. %) und 0,15 g-$O_2$/s/kg-Katalysator. Die Eintrittstemperatur betrug 420 °C, die Austrittstemperatur 436°C und die maximale Temperatur 469°C. Der Umsatz am Rohraustritt von Schwefeldioxid zu Schwefeltrioxid betrug rechnerisch 99,7%.

## Simulation 1a:

In einer weiteren ersten Simulation wurde das Einzelrohr mit einer Mischung aus Inertmaterial zu Katalysator im Verhältnis 82 : 18 ($m^3$:$m^3$) gefüllt. Das Außenrohr wurde mit Luft gekühlt, mit einer Eintrittstemperatur von 450 °C.

Das Einganggas aus Schwefeldioxid zusammen mit Sauerstoff, Stickstoff und Kohlendioxid strömte bei einem Druck von 1,2 bar in das Einzelrohr, die spezifischen Massenströme betrugen dabei 2,10 g-$N_2$/s/kg-Katalysator, 1,40 g-$CO_2$/s/kg-Katalysator, 1,12 g-$SO_2$/s/kg-Katalysator (12,0 Vol. %) und 0,74 g-$O_2$/s/kg-Katalysator. Die Eintrittstemperatur betrug 380 °C, die Austrittstemperatur 480 °C und die maximale Temperatur 498 °C. Der Umsatz am Rohraustritt von Schwefeldioxid zu Schwefeltrioxid betrug rechnerisch 90 %.

### Simulation 2:

In einer zweiten Simulation wurde das Einzelrohr ist mit einer Mischung aus Inertmaterial zu Katalysator im Verhältnis 72,5 : 27,5 (m³:m³) gefüllt. Das Außenrohr wurde mit Luft mit einer Eintrittstemperatur von 380°C und eine Austrittstemperatur von 478°C gekühlt. Schwefeldioxid strömte zusammen mit Sauerstoff, Stickstoff und Kohlendioxid bei einem Druck von 1,4 bar in das Einzelrohr, die spezifischen Massenströme betrugen dabei 1,02 g-$N_2$/s/kg-Katalysator, 0,85 g-$CO_2$/s/kg-Katalysator, 1,24 g-$SO_2$/s/kg-Katalysator (20 Vol. %) und 0,50 g-$O_2$/s/kg-Katalysator. Die Eintrittstemperatur betrug 400 °C, die Austrittstemperatur 488 °C und die maximale Temperatur 575 °C. Der Umsatz am Rohraustritt von Schwefeldioxid zu Schwefeltrioxid betrug rechnerisch 98,6 %.

### Simulation 2a:

In einer weiteren zweiten Simulation wurde das Einzelrohr mit einer Mischung aus Inertmaterial zu Katalysator im Verhältnis 64,5,5 : 35,5,5 (m³:m³) gefüllt. Das Außenrohr wurde mit Luft mit einer Eintrittstemperatur von 440°C gekühlt. Schwefeldioxid strömte zusammen mit Sauerstoff, Stickstoff und Kohlendioxid bei einem Druck von 1,30 bar in das Einzelrohr, die spezifischen Massenströme betrugen dabei 1,82 g-$N_2$/s/kg-Katalysator, 1,51 g-$CO_2$/s/kg-Katalysator, 1,87 g-$SO_2$/s/kg-Katalysator (18 Vol. %) und 1,05 g-$O_2$/s/kg-Katalysator. Die Eintrittstemperatur betrug 410 °C, die Austrittstemperatur 545 °C und die maximale Temperatur 554 °C. Der Umsatz am Rohraustritt von Schwefeldioxid zu Schwefeltrioxid betrug rechnerisch 92 %.

### Simulation 3:

Das Einzelrohr wurde mit einer Mischung aus Inertmaterial zu Katalysator im Verhältnis 60:40 (m³:m³) gefüllt. Das Außenrohr wurde mit Luft gekühlt (Eintrittstemperatur 350°C, Austrittstemperatur 428°C). Schwefeldioxid strömte zusammen mit Sauerstoff und Stickstoff bei einem Druck von 1,4 bar in das Einzelrohr, die spezifischen Massenströme betrugen dabei 0,26 g-$N_2$/s/kg-Katalysator, 1,71 g-$SO_2$/s/kg-Katalysator (50 Vol. %) und 0,51 g-$O_2$/s/kg-Katalysator. Die Eintrittstemperatur betrug 400 °C, die Austrittstemperatur 442 °C und die maximale Temperatur 575 °C. Der Umsatz am Rohraustritt von Schwefeldioxid zu Schwefeltrioxid betrug rechnerisch 93,0%.

### Simulation 3a:

Das Einzelrohr wurde mit einer Mischung aus Inertmaterial zu Katalysator im Verhältnis 50:50 (m³:m³) gefüllt. Das Außenrohr wurde mit Luft gekühlt (Eintrittstemperatur 430 °C, Schwefeldioxid strömte zusammen mit Sauerstoff und Stickstoff bei einem Druck von 1,3 bar in das Einzelrohr, die spezifischen Massenströme betrugen dabei 1,44 g-$N_2$/s/kg-Katalysator, 1,81 g-$SO_2$/s/kg-Katalysator (25 Vol. %) und 0,94 g-$O_2$/s/kg-Katalysator. Die Eintrittstemperatur betrug 380 °C, die Austrittstemperatur 555 °C und die maximale Temperatur 557 °C. Der Umsatz am Rohraustritt von Schwefeldioxid zu Schwefeltrioxid betrug rechnerisch 82 %.

### Simulation 4:

Das Einzelrohr wurde mit einer Mischung aus Inertmaterial zu Katalysator im Verhältnis 50:50 (m³:m³) gefüllt. Das Außenrohr wurde mit Luft gekühlt (Eintrittstemperatur 425 °C, Schwefeldioxid strömte zusammen mit Sauerstoff und Stickstoff bei einem Druck von 1,38 bar in das Einzelrohr, die spezifischen Massenströme betrugen dabei 2,02 g-$N_2$/s/kg-Katalysator, 1,62 g-$SO_2$/s/kg-Katalysator (20 Vol. %) und 0,94 g-$O_2$/s/kg-Katalysator. Die Eintrittstemperatur betrug 380 °C, die Austrittstemperatur 551 °C und die maximale Temperatur 555 °C. Der Umsatz am Rohraustritt von Schwefeldioxid zu Schwefeltrioxid betrug rechnerisch 87 %.

### Simulation 5:

Die Randbedingungen entsprachen, bis auf die Kühllufteintrittstemperatur, der Simulation 4 Stellte man nun die Kühllufteintrittstemperatur auf 330°C so ergab sich überraschenderweise eine Austrittskonzentration von $SO_2$ von rechnerisch 10%. Diese letzte Simulation zeigt, dass die Austrittskonzentration mit der Einstellung der Verfahrensparameter kontrolliert werden kann.

Ein wichtiges Ergebnis der numerischen Simulation ist die Festlegung der Konstruktionsmerkmale des Röhrenkontaktapparates, als da sind Rohrduchmesser, Rohrlänge, K-Wert (Spalt zwischen Innen und Außenrohr), die Rohr-in Rohr Konstruktion als Gleichstromkühler.

**Pilotierungen:**

Die Erfindung wird nun zusätzlich anhand von Ergebnisses aus der durchgeführten Pilotierung eines Einzelrohrreaktors in einer Bypassanodnung gemäss Fig. 2 in einer bestehenden Schwefelsäureanlage unter realen Bedingungen beschrieben. Es werden dabei die Ergebnisse aus 4 Versuchsreihen gezeigt, welche jedoch keine Einschränkung für das erfindungsgemäße Verfahren darstellen.

Es wurde hierzu ein Einzelrohrreaktor entwickelt, der in seinen Dimensionen und seiner Betriebsweise dem einzelnen Rohr eines großtechnischen Apparates mit bis zu mehreren tausend Rohren entspricht.

Der Vorteil bei dieser Vorgehensweise liegt in einer Minimierung des Scale-up Risikos bei der Übertragung in den großtechnischen Massstab.

Kernstück der Pilotanlage war der Einzelrohrreaktor mit seinem Kühlluft Ein- und Austrittsgehäuse und die als Rohr in Rohrkonstruktion ausgebildete gekühlte Reaktionszone. Das zentrale innere Reaktionsrohr (da = 63,5 x 2,6 mm) war über 4 m Höhe mit Katalysatorschüttung gefüllt. Hier reagierte das im Prozessgas enthaltene SO2 unter Wärmefreisetzung zu einem bestimmten Anteil SO3 ab. Über die gesamte Reaktionslänge wurde über die im Rohrspalt der Rohr in Rohrkonstruktion im Gleichstrom gekühlt. Auf der Gaseintrittsseite konnte bei Bedarf SO2 und Sauerstoff zugegeben werden. Die Gaseintrittstemperatur war einstellbar.

Die zugeführte Gas - und Kühlluft waren sowohl in der Menge wie auch in der Eintrittstemperatur einstellbar. Relevante Gasanalysen, Temperatur- und Druckmessungen wurden erfasst und über eine zentrale Messwerterfassung dokumentiert.

In der Pilotierung wurden folgende Prozessparameter untersucht:

SO2-Eingangskonzentration von 10 - 25 %
Gasvolumenströme von 3 bis 14 Nm3/h
Gaseintrittstemperaturen 360 - 450 °C
Kühllufteintrittstemperaturen 350-450 °C
O2/SO2-Verhältnis von 0,8 bis 1,2
Katalysatoranteil in der Schüttung von 18 - 50 %

Tabelle 1

|  | Reihe 1 | Reihe 2 | Reihe 3 | Reihe 4 |
|---|---|---|---|---|
|  |  |  |  |  |
| **Katalysatormischung** |  |  |  |  |
| **im Reaktorrohr (Vol.%)** |  |  |  |  |
| Standardkatalysator | 18 | 27 | 37,5 | 37,5 |
| Cäsiumkatalysator |  | 8,5 | 12,5 | 12,5 |
| Inerte Schüttung | 82 | 64,5 | 50 | 50 |
|  |  |  |  |  |
| **Gas Eintritt Reaktor** |  |  |  |  |
| Volumenstrom (Nm$^3$/h) | 5,3 | 12,2 | 11,5 | 12,1 |
| Konzentrationen: |  |  |  |  |
| SO$_2$ (Vol%) | 11,8 | 18,3 | 25,0 | 20,0 |
| O$_2$ (Vol%) | 15,4 | 20,8 | 26,0 | 18,9 |

(fortgesetzt)

| Gas Eintritt Reaktor | | | | |
|---|---|---|---|---|
| Eintrittstemperatur (°C) | 382 | 409 | 374 | 380 |
| Maximale Temperatur [1] (°C) | 504 | 499 | 532 | 517 |
| | | | | |
| | | | | |
| **Gas Austritt Reaktor** | | | | |
| Konzentrationen: | | | | |
| $SO_2$ (Vol%) | 1,7 | 1,1 | 3,2 | 2,3 |
| $O_2$ (Vol%) | 12,5 | 15,7 | 15,7 | 13,5 |
| Austrittstemperatur (°C) | 500 | 491 | 528 | 513 |
| | | | | |
| **Luftkühlung** | | | | |
| | | | | |
| Volumenstrom ($Nm^3$/h) | 40 | 33 | 30 | 30 |
| Eintrittstemperatur (°C) | 454 | 440 | 426 | 425 |
| Austrittstemperatur (°C) | 513 | 506 | 547 | 529 |
| | | | | |
| **Umsatz $SO_2$ (%)** | 85,6 | 94,0 | 87,2 | 88,5 |
| Über das 4 m lange Reaktionsrohr waren 4 Stück Temperaturmessungen mit einem Abstand von jeweils 1 m eingebracht. Das wirklich erreichte Temperatur Maximum zwischen 2 Messstellen lag um bis zu 50 °C höher. | | | | |

Wie in Tabelle 1 dargestellt, konnte in der praktischen Anwendung des erfindungsgemäßen Verfahrens nachgewiesen werden, das gegenüber dem Stand der Technik spezifisch deutlich mehr Schwefelsäure produziert werden kann, bei gegenüber dem Stand der Technik wesentlich höheren S02 Eingangskonzentrationen, hohem S02 Umsatz in einer Stufe und gutem Regelverhalten der Anlage. Die maximal zulässige Temperatur am Katalysator konnte in allen Fällen durch Einstellen der Kühlleistung und Kühllufteintrittstemperatur sicher eingestellt werden. Die Ergebnisse der Simulation wurden mit hinreichender Genauigkeit bestätigt.

## Patentansprüche

1. Verfahren zur kontinuierlichen katalytischen kompletten oder teilweisen Oxidation eines Ausgangsgases enthaltend Schwefeldioxid und Sauerstoff in einem Röhrenkontaktapparat,
der ein stehender Wärmetauscher aus mehreren Doppelmantelrohren ist, die ein Innenrohr und ein Außenrohr aufweisen, wobei ein Katalysator in den Innenrohren gefüllt ist und die Wärmeübertragung um diese Innenrohre durch ein im Gleichstrom geführtes Medium im Zwischenrohr aus Innen- und Außenrohr erfolgt, **dadurch gekennzeichnet, dass** um die Innenrohre je nach $SO_2$-Konzentration des Eintrittsgases eine kontinuierliche Wärmeabfuhr oder Wärmezufuhr über einen Zwischenkreislauf erfolgt, und der Katalysator mit einer quasi-isothermen Prozessführung unter Energiezufuhr oder Energieabfuhr aktiv gehalten wird.

2. Verfahren nach Anspruch 1, **dadurch gekennzeichnet, dass** der eingesetzte Katalysator in seiner Reaktivität durch Mischen mit einem Inertmaterial im Mengenverhältnis 1: 100 bis 100: 1 voreingestellt wurde.

3. Verfahren nach einem der Ansprüche 1 oder 2 **dadurch gekennzeichnet, dass** das Ausgangsgas einen Schwefeldioxidgehalt von 0,1 bis 66 Vol. % aufweist.

**4.** Verfahren nach einem der vorhergehenden Ansprüche **dadurch gekennzeichnet, dass** dem Ausgangsgas Luft und oder technischer Sauerstoff derart zugeführt wird, dass das Verhältnis $O_2$ zu $SO_2$ im Gas bezogen auf die Volumenanteile von 0,5 bis 1,2 beträgt.

**5.** Verfahren nach einem der vorhergehenden Ansprüche, **dadurch gekennzeichnet, dass** die Energie-Abfuhr durch Luft erfolgt und eine Wärmeübertragungszahl von 20 bis 80 $W/m^2K$ zwischen Innenrohr und Medium eingestellt wird.

**6.** Vorrichtung zur kontinuierlichen katalytischen kompletten oder teilweisen Oxidation eines Ausgangsgases enthaltend Schwefeldioxid und Sauerstoff, umfassend mindestens einen Röhrenkontaktapparat, der ein stehender Wärmetauscher aus mehreren Doppelmantelrohren ist, die ein Innenrohr und ein Außenrohr aufweisen, wobei ein Katalysator in den Innenrohren gefüllt ist und die Wärmeübertragung um diese Innenrohre durch ein im Gleichstrom geführtes Medium im Zwischenrohr aus Innen- und Außenrohr erfolgt und dem Röhrenkontaktapparat ein Absorber zur Abtrennung von $SO_3$ nachgeschaltet ist.

**7.** Vorrichtung nach Anspruch 6, **dadurch gekennzeichnet, dass** die Reaktionsrohre einen Nenndurchmesser von 25 mm bis 150 mm bei einer Rohrlänge von 1 m bis 12 m aufweisen.

**8.** Vorrichtung nach einem der Ansprüche 6 oder 7, **dadurch gekennzeichnet, dass** der Katalysator zur Optimierung der Energie-Abfuhr mit Inertmaterial versetzt ist.

**9.** Vorrichtung nach einem der Ansprüche 6 bis 8, **dadurch gekennzeichnet, dass** die Wärme um die Reaktionsrohre durch z. B. Luft als Kühlmedium übertragen wird und dass die Doppelmantelkonstruktion eine Wärmeübertragungszahl von 20 bis 80 $W/m^2K$ zwischen Innenrohr und Kühlmedium ermöglicht.

**Claims**

**1.** Process for the continuous catalytic complete or partial oxidation of a starting gas containing sulphur dioxide and oxygen in a tube contact apparatus which is an upright heat exchanger comprising a plurality of double-wall tubes which have an interior tube and an outer tube, with a catalyst being introduced in the interior tubes and heat transfer being effected around these interior tubes by means of a medium which is conveyed in cocurrent through the intermediate tube made up of interior and outer tubes, **characterized in that**, depending on the $SO_2$ concentration of the feed gas, continuous removal of heat or introduction of heat is effected around the interior tubes by means of an intermediate circuit and the catalyst is kept active by means of pseudoisothermal process conditions with introduction of energy or removal of energy.

**2.** Process according to Claim 1, **characterized in that** the reactivity of the catalyst used has been preset by mixing with an inert material in a ratio of from 1:100 to 100:1.

**3.** Process according to either Claim 1 or 2, **characterized in that** the starting gas has a sulphur dioxide content of from 0.1 to 66% by volume.

**4.** Process according to any of the preceding claims, **characterized in that** air and/or technical-grade oxygen is introduced into the starting gas so that the volume ratio of $O_2$ to $SO_2$ in the gas is from 0.5 to 1.2.

**5.** Process according to any of the preceding claims, **characterized in that** the removal of energy is effected by means of air and a heat transfer coefficient of from 20 to 80 $W/m^2K$ between interior tube and medium is set.

**6.** Apparatus for the continuous catalytic complete or partial oxidation of a starting gas containing sulphur dioxide and oxygen, which comprises at least one tube contact apparatus which is an upright heat exchanger comprising a plurality of double-walled tubes which have an interior tube and an outer tube, with a catalyst being introduced in the interior tubes and heat transfer being effected around these interior tubes by means of a medium which is conveyed in cocurrent through the intermediate tube made up of interior and outer tubes and an absorber for removing $SO_3$ being located downstream of the tube contact apparatus.

**7.** Apparatus according to Claim 6, **characterized in that** the reaction tubes have a nominal diameter of from 25 mm to 150 mm at a tube length of from 1 m to 12 m.

8. Apparatus according to either of Claims 6 and 7, **characterized in that** the catalyst is admixed with inert material to optimize the removal of energy.

9. Apparatus according to any of Claims 6 to 8, **characterized in that** the heat around the reaction tubes is transferred by, for example, air as cooling medium and **in that** the double-walled construction makes possible a heat transfer number of from 20 to 80 W/m$^2$K between interior tube and cooling medium.

**Revendications**

1. Procédé pour l'oxydation catalytique partielle ou totale continue d'un gaz de départ contenant du dioxyde de soufre et de l'oxygène dans un appareil à contact tubulaire,
qui est un échangeur thermique vertical constitué de plusieurs tubes à double enveloppe, qui comportent un tube interne et un tube externe, un catalyseur étant placé dans les tubes internes et le transfert de chaleur s'effectuant autour de ces tubes internes au moyen d'un fluide envoyé en co-courant dans le tube intermédiaire constitué par le tube interne et le tube externe, **caractérisé en ce qu'**autour du tube interne en fonction de la teneur en SO$_2$ du gaz entrant il s'effectue une dissipation continue de chaleur ou un apport continu de chaleur par un circuit intermédiaire, et le catalyseur est maintenu actif avec une conduite quasi-isothermique du processus avec apport d'énergie ou dissipation d'énergie.

2. Procédé selon la revendication 1, **caractérisé en ce que** le catalyseur utilisé a été pré-ajusté quant à sa réactivité par mélange avec un matériau inerte en un rapport de quantités de 1:100 à 100:1.

3. Procédé selon la revendication 1 ou 2, **caractérisé en ce que** le gaz de départ présente une teneur en dioxyde de soufre de 0,1 à 66 % en volume.

4. Procédé selon l'une quelconque des revendications précédentes, **caractérisé en ce qu'**on ajoute de l'air et/ou de l'oxygène industriel au gaz de départ, de manière que le rapport O$_2$ à SO$_2$ dans le gaz vaille de 0,5 à 1,2 sur la base des proportions en volume.

5. Procédé selon l'une quelconque des revendications précédentes, **caractérisé en ce que** la dissipation d'énergie s'effectue par l'air et on ajuste un indice de transfert thermique de 20 à 80 W/m$^2$K entre tube interne et fluide.

6. Dispositif pour l'oxydation catalytique partielle ou totale continue d'un gaz de départ contenant du dioxyde de soufre et de l'oxygène, comprenant au moins un appareil à contact tubulaire, qui est un échangeur thermique vertical constitué de plusieurs tubes à double enveloppe, qui comportent un tube interne et un tube externe, un catalyseur étant placé dans les tubes internes et le transfert de chaleur s'effectuant dans ces tubes internes par un fluide envoyé en co-courant dans le tube intermédiaire constitué par le tube interne et le tube externe, et un absorbeur destiné à la séparation de SO$_3$ étant raccordé à la suite de l'appareil à contact tubulaire.

7. Dispositif selon la revendication 6, **caractérisé en ce que** les tubes de réaction présentent un diamètre nominal de 25 mm à 150 mm pour une longueur de tube de 1 m à 12 m.

8. Dispositif selon la revendication 6 ou 7, **caractérisé en ce que** pour l'optimisation de la dissipation d'énergie un matériau inerte est ajouté au catalyseur.

9. Dispositif selon l'une quelconque des revendications 6 à 8, **caractérisé en ce que** la chaleur est transférée autour des tubes de réaction par exemple par de l'air en tant que fluide réfrigérant et **en ce que** la construction de double enveloppe permet un indice de transfert de chaleur de 20 à 80 W/m$^2$K entre tube interne et fluide réfrigérant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10249782
- GB 1504725 A

**In der Beschreibung aufgeführte Nicht-Patentliteratur**

- Rate Equations of Solie-Catalyzed Reactions. University Tokyo Press, 1990, 1-11